# EUROPÄISCHE PATENTSCHRIFT

(11) **EP 1 749 733 B1**
(45) Veröffentlichungstag und Bekanntmachung des Hinweises auf die Patenterteilung: **17.11.2010**
(21) Anmeldenummer: 06016435.7
(22) Anmeldetag: 07.08.2006
(51) Int. Cl.: B62D 31/02

(54) **Fahrzeuggerippe mit vordefinierten Öffnungen und Schnittstellen zur Einbindung unterschiedlicher Module sowie Verfahren zur Modulmontage**
Framework of a vehicle exhibiting predefined openings and receiving sections for the connection of different modules and the process of the modul assembly therein
Ossature de véhicule présentant des ouvertures prédéfinies ainsi que des endroits de connections avec différents modules, et procédé de montage des modules

(30) Priorität: 06.08.2005 DE 102005037180
(43) Veröffentlichungstag der Anmeldung: 07.02.2007
(73) Patentinhaber: MAN Nutzfahrzeuge Aktiengesellschaft, 80976 München (DE)
(72) Erfinder: Gülke, Norbert, Dr., 31139 Hildesheim (DE); Belling, Torsten, 38118 Braunschweig (DE); Krimmling, Harald, 38126 Braunschweig (DE)

(56) Entgegenhaltungen:
- EP-A2- 0 990 572
- US-A- 4 221 426
- US-A- 5 797 646
- US-A1- 2003 209 922

## Beschreibung

Die Erfindung betrifft einen Omnibus mit einem Fahrzeuggerippe nach dem Oberbegriff des Anspruchs 1.

Fahrzeuggerippe sind bei Omnibussen allgemein bekannt. Beim Fahrzeugaufbau können zwei Rahmenkonzepte verfolgt werden, nämlich eine Leiterrahmenbauweise oder eine Gitterrohrrahmen-Bauweise. Bei der Leiterrahmenbauweise werden das eigenständige Fahrgestell und ein Fahrgastzellenaufbau miteinander verschraubt. Der Aufbau kann in der Regel ebenso wie das meist fahrfertige Chassis komplett ausgerüstet werden. Beim Gitterrohrrahmen kann das Fahrgestell und die Fargastzelle zusammen eine untrennbare selbsttragende Einheit bilden, die mit allen Einbauten ausgerüstet wird. Der Omnibus kann als Solofahrzeug oder als Gelenkfahrzeug ausgeführt sein, wobei neben einem Fahrerarbeitsplatz eine unterschiedliche Anzahl an Türeinheiten und Fenstereinheiten im Fahrzeug vorgesehen sein können. Diese Einheiten sind am Fahrzeuggerippe montiert, und bilden erst im fertig montierten Zustand das vollständige Fahrzeug. Abhängig von der Nutzungsart und der Verkehrsrichtung ist der Fahrerarbeitsplatz im Bugbereich des Fahrzeuggerippes montiert. Bei Fahrzeugen, welche für den Rechtsverkehr bestimmt sind, befindet sich der Fahrerarbeitsplatz i.d.R. im Bugbereich auf der linken Seite des Fahrzeugs, und bei Fahrzeugen, welche für den Linksverkehr bestimmt sind, auf der rechten Seite im Bug des Fahrzeugs. Gewöhnlich ist unter Berücksichtigung der Längsrichtung des Fahrzeugs in der Höhe des Fahrerarbeitsplatzes eine Türeinheit vorgesehen, wobei die Türeinheit auf gleiche Weise wie der Fahrerarbeitsplatz abhängig von der Verkehrsrichtung auf der linken bzw. auf der rechten Seite des Fahrzeugs angeordnet ist.

Aus der DE 44 20 097 C2 ist ein Omnibus modularen Aufbaus bekannt, wobei das Fahrzeuggerippe in einen Vorderteil, einen Hinterteil und einen dazwischen liegenden Mittelteil aufgeteilt ist. Das Vorderteil ist als Buggerippe aufgebaut, wobei dieses an einer Dachstruktur des Fahrzeugs hängt, und unterhalb des Vorderteils die Vorderräder angeordnet sind, welche durch einen U-förmig nach unten durchgewölbten Fahrschemel getragen sind, welcher ein Mittelstück mit nach oben auslaufenden Schenkeln aufweist, deren Enden mit jeweils nach seitlich außen abragenden Auslegern versehen sind, gegen die die Radaufstandskräfte nach oben abgestützt sind, und bei dem der Fahrschemel in Fahrzeuglängsrichtung gegen die Frontseite der Fahrgastzelle in dessen Bodenbereich und nach oben über Ausleger gegen das Buggerippe des Vorderteils abgestützt ist. Bei einem derartigen Aufbau entsteht das Problem, dass Fahrzeuggerippe mit dem Fahrerarbeitsplatz am Fahrzeug selbst montiert ist und eine konstruktive Gesamteinheit bildet. Dadurch ergibt sich eine nach der Montage nicht mehr veränderbare Einheit aus dem Fahrzeuggerippe, den tragenden Fahrzeugkomponenten und dem Fahrerarbeitsplatz. Die Montage erfordert eine sukzessive Aufeinanderfolge verschiedener Fügeoperationen, welche im Wesentlichen nicht zeitgleich ausführbar sind, wobei alle Fügeoperationen direkt am Fahrzeug vorgenommen werden müssen. Die Begrenzung der Montage direkt am Nutzfahrzeug ist somit zeitintensiv, da sie aufgrund der örtlichen Begrenzung Parallelmontagen behindert und nur jeweils aufeinander folgende Fügeoperationen möglich sind. Zudem ist eine Montage und Funktionsprüfung einzelner Komponenten im Montageverbund vor der Endmontage außerhalb des Nutzfahrzeugs nicht möglich.

Die DE 102 59 898 A1 offenbart einen Omnibus mit einem speziellen, eine Türeinheit umfassendes Fahrzeuggerippe. Der Omnibus ist gekennzeichnet durch ein spezielles Fahrzeuggerippe mit einem Fahrzeuggerippehinterteil mit Hinterachse und Antriebsaggregat samt Nebenaggregaten an einem hochflurigen, selbsttragenden Rahmenquerschnitt, einem Fahrzeuggerippemittelteil, bestehend aus einem selbsttragenden Niederflurrahmen mit seitlich äußeren Längsträgern, vorderen und hinteren Querträgern sowie sich zwischen den Längsträgern erstreckenden Querspanten, und einen massiven Türrahmen in jedem der niederflurigen Fahrgestellteile, der dort als Teil eines Einstieges ein entsprechendes Stück des betreffenden Längsträgers an der vorgesehenen Stelle ersetzt und innerhalb des Niederflurrahmens ein mittragendes Organ bildet, auf welchem ein Fahrgestell ein nicht oder kaum mittragender Omnibusaufbau befestigbar ist. Problematisch ist bei einem derartigen Aufbau, dass die Türeinheit selbst am jeweiligen Fahrzeuggerippeteil des Fahrzeugs montiert wird und somit eine konstruktive Gesamteinheit bildet. Dadurch ergibt sich wie auch beim Fahrerarbeitsplatz eine nach der Montage nicht mehr veränderbare, d.h. aus- und einbaubare Einheit aus dem Fahrzeuggerippe, den tragenden Fahrzeugkomponenten und der Türeinheit. Die Montage erfordert eine sukzessive Aufeinanderfolge verschiedener Fügeoperationen, welche im Wesentlichen nicht zeitgleich ausführbar sind, wobei alle Fügeoperationen direkt am Fahrzeug vorgenommen werden müssen. Die Begrenzung der Montage direkt am Nutzfahrzeug ist somit zeitintensiv, da sie aufgrund der örtlichen Begrenzung Paratlelmontagen behindert und nur jeweils aufeinander folgende Fügeoperationen möglich sind. Der Rahmen des Fahrzeugs muss abhängig vom Verwendungszweck oder der Verkehrsrichtung wie Rechts- oder Linksverkehr entsprechend entwickelt und konstruiert werden, was hohe Kosten verursacht und zeitintensiv ist.

In der DE 102 48 654 A1 ist ein Verfahren zum Herstellen einer Kraftfahrzeugkarosserie, insbesondere einer Omnibuskarosserie, mit einem Fahrzeuggerippe, einer mit dem Fahrzeuggerippe im Wesentlichen starr verbundenen Karosserieaußenhaut und wenigstens einer in die Karosserie integrierten Fenstereinheit offenbart. Die bei diesem Verfahren ausgeführten Schritte betreffen das Vorsehen eines Montagerahmens, das Befestigen des Fenstermoduls und/ oder eines Abschnitts der Karosserieaußenhaut an dem Montagerahmen und ein starres Verbinden des Montagerahmens mit dem Fahrzeuggerippe. Im Wesentlichen stellt die Erfindung darauf ab, dass Bestandteile der Karosserieaußenhaut fern vom Fahrzeugrahmen des Omnibusses vorgefertigt und dann zusammen mit dem Montagerahmen als Modul an den Fahrzeugrahmen des Omnibusses angebaut werden. Jedoch sind die außerhalb der Rohbaustruktur vorgefertigten Module der Karosserieaußenhaut örtlich an das Fahrzeuggerippe angepasst und damit in ihrer Position nicht veränderbar, womit das Fahrzeug an eventuell im Gebrauch des Nutzfahrzeugs sich ändernde Nutzungsbedingungen nicht anpassbar ist.

Die DE 198 60 557 C1 offenbart Innenausbaumodule für Reisezugwagen oder Reisebusse, wobei erfindungsgemäß ein Modul aus einem L-förmigen, vorgefertigten Segment besteht, wobei der längere L-Schenkel das Seitenwandverkleidungssystem und der kürzere L-Schenkel wenigstens anteilmäßig ein komplettes Fußbodensystem bildet. Hierdurch wird es möglich, durch die vorgefertigten Fenstereinheiten den Innenkorpus eines Omnibusses vorauszubauen und anschließend mit wenigen Arbeitsschritten am Fahrzeuggerippe selbst einzubauen. Ein Problem bei einem Fahrzeugaufbau gemäß dieses Standes der Technik entsteht jedoch dadurch, dass die Fenstereinheiten am jeweiligen Fahrzeuggerippeabschnitt des Omnibusses montiert werden und somit eine fest vorbestimmte konstruktive Gesamteinheit bilden. Dadurch ergibt sich nach der fest vorgegebenen Anordnung der Fenstereinheiten eine nicht mehr veränderbare Einheit aus dem Fahrzeuggerippe, den tragenden Fahrzeugkomponenten und den Fenstereinheiten. Ein Omnibus mit gemäß dem Stand der Technik vorgefertigten Fenstereinheiten kann nach Fertigstellung nicht nachträglich an geänderte Nutzungsbedingungen angepasst werden, wobei Fenster- und Türeinheiten eine feste Anordnung zueinander aufweisen. Beispielsweise kann der Omnibus nicht für einen Wechsel der Verkehrsrichtung angepasst werden, indem Tür- und Fenstereinheiten gegeneinander tauschbar sind, um für einen Einsatz im Rechtsverkehr die Türeinheiten auf der rechten Seite des Omnibusses vorzusehen und analog für den Linksverkehr auf der linken Seite des Omnibusses.

Ferner werden durch explizite Bezugnahme die Parallelanmeldungen "Modularer Fahrerarbeitsplatz für ein Nutzfahrzeug", "Türmodul für einen Omnibus" und "Fenstermodul für einen Omnibus" derselben Anmelderin als integraler Bestandteil in die vorliegende Anmeldung aufgenommen. In diesen Parallelanmeldungen sind ein Fahrerarbeitsplatzmodul, ein Türmodul und ein Fenstermodul offenbart, welche fern vom Nutzfahrzeug bzw. Omnibus montierbar und in entsprechende Modulöffnungen im Fahrzeuggerippe einsetzbar sind.

Die vorgenannten Probleme des Standes der Technik ergeben sich daraus, dass das Fahrzeuggerippe entweder Montageöffnungen aufweist, welche für die vorbestimmte und ausschließliche Aufnahme von entweder einen Fahrerarbeitsplatz, einer Türeinheit oder einer Fenstereinheit bestimmt sind oder dass die Einheiten direkt in das Fahrzeuggerippe integriert sind, bzw. Bestandteil dessen sind und damit eine modulare Austauschbarkeit der Einheiten auch hier nicht gegeben ist.

Aus der US 5,797,646 ist ein Fahrzeuggerippe bekannt, bei dem in Modulöffnungen ein stets gleicher Rahmen einsetzbar ist, wobei in dem Rahmen wiederum unterschiedliche Tür- oder Fenstermodule eingesetzt werden können.

Des Weiteren ist aus der EP 0 990 572 A2 ein Wagenkasten mit einem Kastengerippe bekannt, bei dem im Bereich der Seitenwandstruktur je Kastengerippefeld ein Teilseitenwandelement eingesetzt ist, das in den Raum zwischen zugehörigen Spanten greift.

Es ist daher die Aufgabe der vorliegenden Erfindung, einen Omnibus mit einem Fahrzeuggerippe zu schaffen, bei dem die Probleme des Standes der Technik vermieden werden und in welchen insbesondere auf eine schnelle und wirtschaftliche Weise vormontierte omnibusspezifische Module schnell und unabhängig von der Einbaustelle montierbar sind.

Diese Aufgabe wird erfindungsgemäß gelöst durch einen Omnibus mit den Merkmalen des Patentanspruchs 1. Vorteilhafte Weiterbildungen der Erfindung sind in den abhängigen Ansprüchen angegeben.

Die Erfindung schließt die technische Lehre ein, dass das Fahrzeuggerippe auf der linken Fahrzeugseite und auf der rechten Fahrzeugseite Modulöffnungen zur wahlweise wechselseitigen Aufnahme von einem Fahrerarbeitsplatzmodul und mindestens einem Türmodul und/ oder mindestens einem Fenstermodul aufweist. Dabei können insbesondere im Buggerippe ein Fahrerarbeitsplatzmodul und ein Türmodul je nach geforderter Lenkervariante - Linkslenker oder Rechtslenker - links oder rechts in der gleichen Modulöffnung montiert werden.

Diese Lösung bietet den Vorteil, dass der Omnibus modular für verschiedene Nutzungsbedingungen, verschiedene Ausstattungsvarianten und unabhängig von der Verkehrsrichtung über eine Vielzahl von montierbaren Modulen aufbaubar ist, ohne Änderungen am Fahrzeuggerippe vornehmen zu müssen. Die Modulöffnungen weisen standardisierte äußere Abmessungen auf, an welche zur wahlweisen Aufnahme verschiedener Module keine oder zumindest keine wesentlichen Änderungen vorgenommen werden müssen. Mit diesem modularen Baukastenprinzip ist ein Omnibus aufbaubar, welcher einen standardisierten Grundkörper in Form eines Fahrzeuggerippes bietet und an das als einer der letzten Montagevorgänge in Abhängigkeit von den späteren Nutzungsbedingungen die Module wie ein Fahrerarbeitsplatzmodul, die Türmodule und die Fenstermodule eingesetzt werden. Das Fahrerarbeitsplatzmodul ist im Omnibus einfach vorhanden, wobei das Türmodul und das Fenstermodul mehrfach vorhanden sein kann. Vorteilhafterweise ist auch nach Inbetriebnahme des Fahrzeugs ein Wechsel der Module möglich, so dass der Omnibus beispielsweise für geänderte Nutzungsbedingungen von einem Einsatz im Rechtsverkehr auf einen Einsatz im Linksverkehr umgerüstet werden kann oder auf eine andere Ausstattungsvariante umrüstbar ist. Dabei kann der Fahrerarbeitsplatz beispielsweise gegen das Türmodul ausgetauscht werden, da das vordere Türmodul wie allgemein bekannt unter Berücksichtigung der Fahrtrichtung auf der gleichen Höhe angeordnet ist wie das Fahrerarbeitsplatzmodul. Gleichermaßen kann das hintere Türmodul gegen ein gegenüberliegend angeordnetes Fenstermodul austauschbar sein. Weitere Möglichkeiten einer Austauschbarkeit kann zwischen zumindest einem weiterten Fenstermodul und zumindest einem weitern Türmodul gesehen werden, um beispielsweise die Anzahl der Türen im Fahrzeug zu ändern.

Vorteilhafterweise sind die Modulöffnungen standardisiert, sodass in diese wahlweise zumindest ein Fahrerarbeitsplatzmodul, ein Türmodul oder ein Fenstermodul einsetzbar ist und die standardisierten Modulöffnungen so ausgebildet sind, dass eine wechselseitige Montage bzw. ein wechselseitiger Austausch eines Fahrerarbeitsplatzmoduls mit einem Türmodul und/ oder ein wechselseitiger Austausch eines Türmoduls mit einem Fenstermodul möglich ist. Die Standardisierung betrifft sowohl die Anordnung der Befestigungsmittel, über welche das entsprechende Modul in der Modulöffnung befestigt wird, als auch die Anpassung an die definierten äußeren Abmessungen der Module, welche eine Schnittstelle zwischen dem Modul und der Modulöffnung im Fahrzeuggerippe darstellt. Die Modulöffnung weist dabei vorteilhafterweise einen rechteckigen Querschnitt auf und kann beispielsweise 2,20 m hoch und 1,50 m breit sein. Allerdings können auch Modulöffnungen mit einem Vielfachen der Breite oder einem Bruchteil der Breite der Grundvariante vorgesehen sein.

Das Fahrerarbeitsplatzmodul ist wie allgemein bekannt im Bugbereich des Fahrzeuggerippes angeordnet. Bei einer Anpassung des Omnibusses an die Verkehrsrichtung sind vorzugsweise das Türmodul mit einem Fenstermodul und das Fahrerarbeitsplatzmodul mit einem Türmodul austauschbar. Auf der hinteren Seite des Omnibusses ist gegenüber des Türmoduls i.d.R. ein Fenstermodul eingesetzt, welches zur Anpassung der Verkehrsrichtung des Omnibusses gegen das Türmodul getauscht wird, so dass die Einstiegsseite des Fahrzeugs geändert wird. Bei unterschiedlichen Modulen gleicher Funktion, beispielsweise der Variation zwischen einem ein- und einem zweiflügeligen Türmodul können Zwischenelemente eingesetzt werden, welche die äußeren Abmessungen des Moduls an die Standardisierung der Modulöffnung im Fahrzeuggerippe anpassen, sodass die Standardisierung der Modulöffnungen erhalten bleibt.

Nach einer möglichen Weiterbildung der Erfindung wird vorgeschlagen, dass sowohl ein Chassis als auch eine Karosserie am Omnibus montiert sind, wobei im Wesentlichen nur noch die Modulöffnungen im Fahrzeuggerippe geöffnet sind, d.h. für die übrigen Flächen, wie beispielsweise das Dach, ist die Beblechung bereits auf dem Gerippe angebracht. Vorteilhafterweise können somit die einzelnen Module abschließend in die Modulöffnungen am Fahrzeug eingesetzt werden und sogar nach Inbetriebnahme des Fahrzeugs entnommen werden, ohne weitere Komponenten wie das Chassis und die Karosserie zu demontieren. Die Module können außerhalb und unabhängig vom Fahrzeug montiert und vorgeprüft werden, wobei das Fahrzeug ohne weitere Arbeiten an den genannten Komponenten wie dem Chassis oder der Karosserie nach dem Einsetzen der Module im Wesentlichen fertiggestellt ist. Vorteilhafterweise kann auf diese Weise ein Fahrzeuggrundkörper geschaffen werden, welcher nutzungs-, ausstattungs- und verkehrsrichtungsunabhängig ist und eine Nutzungsbestimmung des Fahrzeugs erst durch das Einsetzen der entsprechenden Module erfolgt. Zudem vereinfacht sich eine vorübergehende Demontage der Module zu eventuellen Wartungszwecken oder zur Umrüstung auf eine geänderte Nutzung.

Um eine Anpassung der Module an die Querschnittsgeometrie des Omnibusses zu erzielen, ist es von besonderem Vorteil, dass das Fahrerarbeitsplatzmodul und/ oder das Türmodul und/ oder das Fenstermodul einen L-förmigen Querschnitt aufweist, wobei ein horizontal verlaufender Schenkel zumindest teilweise einen Bodenabschnitt und ein vertikal verlaufender Schenkel zumindest teilweise einen Seitenwandabschnitt des Nutzfahrzeugs bildet. Der Schenkel des Seitenwandabschnittes kann sich dabei jedoch auch noch unterhalb des horizontal verlaufenden den Bodenbereich bildenden Schenkels erstrecken. Der Bodenschenkel kann im eingebauten Zustand der Module zumindest einen Teil des Bodens im Fahrgastraum bzw. im Bereich des Fahrerarbeitsplatzes bilden, wobei in Abhängigkeit von der Breite des Omnibusses sowie der Länge des Bodenschenkels der Boden des Fahrgastraums vollständig aus den nebeneinander auf jeder Fahrzeugseite angeordneten Fenstermodulen ausgebaut werden kann. Der Boden des Fahrerarbeitsplatzes kann gegenüber dem Boden des Fahrgastraumes erhöht ausgebildet sein. Die vertikal verlaufende Seitenwand kann innenseitig sowie außenseitig Verkleidungselemente umfassen, wobei das Fahrerarbeitsplatzmodul zudem ein integriertes Fahrerfenster in der vertikal verlaufenden Seitenwand aufweisen kann. Bei einem Fenstermodul kann wenigstens ein Teil einer Bestuhlung bereits außerhalb des Omnibusses vormontiert werden, sodass die Integrationsdichte der Fenstermodule und damit die Vormontagetiefe weiter erhöht wird. Die Montage der Bestuhlung kann an einen der Schenkel des Fenstermoduls mittels verschiedener Verbindungsmittel wie beispielsweise eine Verschraubung erfolgen, wobei die Montage ebenfalls sowohl am Bodenschenkel als auch am Seitenwandschenkel erfolgen kann, um eine höhere Belastbarkeit der Montageverbindung zu erzielen. Beim Türmodul kann im horizontal verlaufenden Schenkel eine Trittvorrichtung vorgesehen werden, welche zumindest eine Stufe umfasst und eine definierte Außenkontur aufweist, um in den Bodenbereich des Innenraumes des Omnibusses überzugehen.

Vorteilhafterweise erfolgt die Verbindung des Fahrerarbeitsplatzmoduls und/ oder des Türmoduls und/ oder des Fenstermoduls an das Fahrzeuggerippe mit mechanischen Verbindungsmitteln. Diese mechanischen Verbindungsmittel können als formschlüssige Verbindungen wie beispielsweise Schraubenverbindungen ausgeführt sein. Durch eine Lösbarkeit der Verbindung kann vorteilhafterweise bei einer späteren Veränderung des Omnibusses durch geänderte Nutzungsbedingungen wie der Verkehrsrichtung oder dem Einsatz eines anderen Moduls in einem anders genutzten Fahrzeug wie ein Linien- oder Reisebus das entsprechende Modul demontiert werden und in einem anderen Fahrzeug weiterbetrieben werden bzw. das Fahrzeug mit einem anderen Modul ausgestattet werden. Die Demontage kann soweit vereinfacht werden, dass sogar zu Wartungs- oder Reparaturzwecken ein vorübergehender Ausbau sinnvoll ist.

Eine weitere Verbindungstechnik kann dadurch vorgesehen werden, indem die Verbindung des Fahrerarbeitsplatzmoduls und/ oder des Türmoduls und/ oder des Fenstermoduls durch ein Verkleben erfolgt. Damit können auch für die Fügeverbindung der Module mit dem Fahrzeuggerippe die Vorteile einer Klebeverbindung genutzt werden, wobei die Klebeverbindungen eine Dämpfungswirkung aufweisen, welche Geräusche wie ein Klappern oder ein Quietschen verhindern und sich im Betrieb des Fahrzeugs nicht lockern oder lösen. Die entsprechenden Kontaktelemente des Moduls und des Fahrzeuggerippes weisen dabei eine hinreichend große Kontaktfläche auf, um eine ausreichende Festigkeit der Klebeverbindung zu erzielen. Auch Klebetechniken gestatten wie allgemein bekannt ein Lösen der Verbindung durch mechanische, thermische oder chemische Einwirkung auf die Klebeverbindung, sodass hierdurch keine Einschränkung hinsichtlich der Demontierbarkeit der Komponenten vom Montagerahmen gesehen werden muss.

Aus konstruktiven Gründen ist es von besonderem Vorteil, dass elektrische, mechanische oder fluidische Verbindungsmittel zwischen den Modulen und dem Fahrzeuggerippe standardisierte Anschlüsse aufweisen. Die vorbereiteten, standardisierten Anschlüsse in oder im Bereich der Modulöffnungen bieten vereinfachend die Möglichkeit, beim Einsetzen und Befestigen der Module in die standardisierte Modulöffnung am Fahrzeug lediglich die Verbindungen zwischen einzelnen Komponenten der Module und den peripheren Komponenten im Fahrzeuggerippe vorzunehmen. Die Standardisierung der Anschlüsse ermöglicht dabei eine Unabhängigkeit von der Lenkervariante oder sogar von der Modellvariante des Fahrzeugs, wobei die Anschlussgegenstücke im Fahrzeug so platziert sind, dass eine Verbindung der Anschlüsse sowohl bei einem Einsetzen in einer linken als auch in einer rechten Modulöffnung im Fahrzeuggerippe erfolgen kann. Insbesondere die elektrischen Anschlüsse der verschiedenen Module können als eine zentrale elektrische Verbindung ausgeführt sein, sodass in Form eines Sammelanschlusses die Verbindung zentral herstellbar ist, und nicht jede Komponente eines Moduls einzeln verbunden werden muss.

Eine weitere vorteilhafte Möglichkeit der Anordnung der Anschlüsse kann erzielt werden, indem die standardisierten Anschlüsse vorzugsweise im horizontal verlaufenden Schenkel der Module angeordnet sind, um eine Integration der Anschlüsse im Bodenbereich des Moduls bzw. des Omnibusses zu schaffen. Neben elektrischen Verbindungen verlaufen vorzugsweise mechanische und hydraulische und/ oder pneumatische im Verbindungen im Bodenbereich. Insbesondere beim Fahrerarbeitsplatzmodul sind mechanische Verbindungen der Lenkung, der Schaltung und der Pedale erforderlich, welche vorteilhafterweise im Bodenbereich angeordnet ist. Das jeweilige Modul weist entsprechende Verbindungsgegenstücke auf, wobei die Anschlüsse vorzugsweise mittig im Fahrzeug angeordnet sind, um zentral linksseitig als auch rechtsseitg das Fahrerarbeitsplatzmodul, das Türmodul oder das Fenstermodul anzuschließen.

Nachfolgend wird eine vorteilhafte Ausführungsform der vorliegenden Erfindung zusammen mit der Beschreibung der Figuren näher dargestellt. Es zeigt:
- Fig. 1: eine schematische Darstellung eines Omnibusses mit mehreren Modulöffnungen;
- Fig. 2: eine Draufsicht des vorderen Bereiches eines Omnibusses mit einem schematisch dargestellten Türmodul und einem Fahrerarbeitsplatzmodul;
- Fig. 3: eine Draufsicht eines vorderen Teils eines Omnibusses mit mehreren Modulöffnungen;
- Fig. 4: eine Draufsicht eines hinteren Teils eines Omnibusses mit mehreren Modulöffnungen;
- Fig. 5: eine schematische Seitenansicht auf ein Fahrzeuggerippe mit Modulöffnungen;
- Fig. 6: eine Querschnittsansicht durch ein Fahrzeuggerippe mit Modulöffnungen; und
- Fig. 7: eine Querschnittsansicht gemäß Figur 6, jedoch mit eingebautem Fenster- und Türmodul

Bei den Figuren handelt es sich lediglich um beispielhafte schematische Darstellungen.

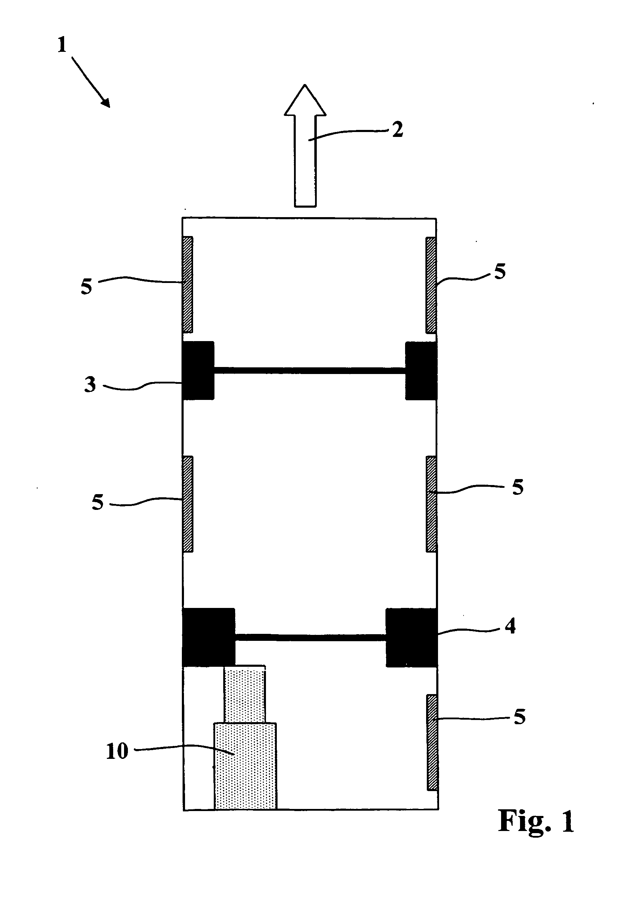

Fig. 1 zeigt eine Darstellung eines Omnibusses 1, wobei die Fahrtrichtung 2 durch einen Pfeil angedeutet ist. Der Omnibus 1 ist im dargestellten Ausführungsbeispiel ein Solofahrzeug mit einer Vorderachse 3 und einer Hinterachse 4, wobei mehrere Modulöffnungen 5 an der Außenseite des Omnibusses dargestellt sind. Die Modulöffnungen 5 sind auf der rechten und linken Seite des Omnibusses angeordnet, wobei die Modulöffnungen 5 in Fahrtrichtung 2 vor der Vorderachse 3, zwischen der Vorder- und der Hinterachse 3 und 4 sowie hinter der Hinterachse 4 angeordnet sind. Die Modulöffnungen 5 vor der Vorderachse 3 sind in Fahrtrichtung 2 im Wesentlichen auf der Höhe des Fahrerarbeitsplatzes (nicht dargestellt) angeordnet, wobei die Modulöffnungen 5 im Mittelteil des Omnibusses 1 auf einer gleichen Höhe in Bezug auf die Fahrtrichtung 2 dargestellt sind. Im hinteren Bereich des Omnibusses wird bei einer Linkslenkervariante ein Fenstermodul, welches in einer Modulöffnung 5 auf der gleichen Höhe wie eine Türeinheit eingebaut ist, auf der linken Fahrzeugseite und bei einer Rechtslenkervariante auf der rechten Fahrzeugseite eingesetzt. Dabei sind die Fenstermodule nebeneinander in den Fahrzeugrahmen integriert, und bilden die Außenverkleidung des Omnibusses. Eine Motor-Getriebeeinheit 10 befindet sich im Heck des Omnibusses, und kann optional für die Links- oder die Rechtslenkervariante auf der rechten oder der linken Seite im Heck des Omnibusses angeordnet sein, wobei im vorliegenden Ausführungsbeispiel der linksseitige Einbau gezeigt ist.

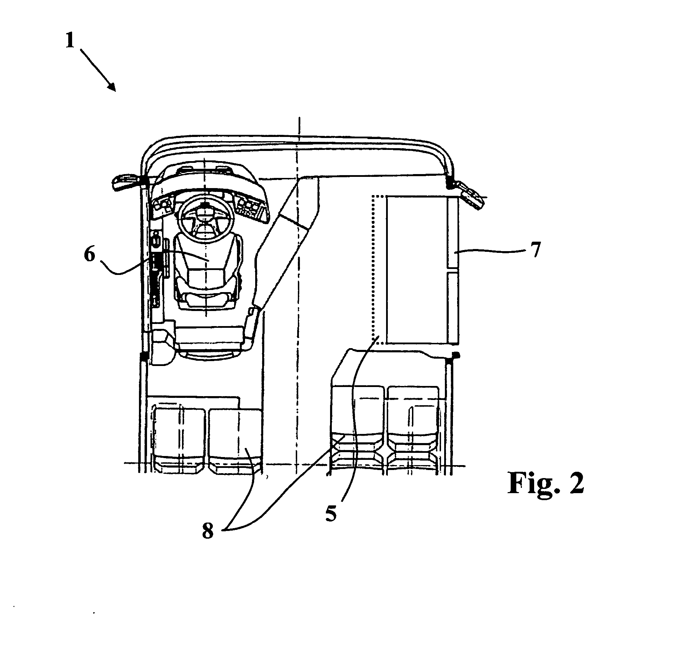

Eine Draufsicht eines vorderen Bereiches eines Omnibusses 1 ist in Fig. 2 gezeigt, in dem linksseitig ein Fahrerarbeitsplatzmodul 6 und rechtsseitig ein Türmodul 7 in jeweils eine Modulöffnung 5 eingesetzt ist. Das Türmodul 7 befindet sich auf der rechten vorderen Fahrzeugseite in Bezug auf die Fahrtrichtung 2 auf der gleichen Höhe wie der Fahrerarbeitsplatz 6, welcher in dargestellter Weise zumindest einen Fahrersitz, eine Lenkungseinheit, einen Kassentragarm mit einer Verkleidung, eine Fahrerkabinentür, ein seitliches Bedienfeld und eine Bedientafelabdeckung umfasst, wobei die genannten Komponenten derart angeordnet sind, dass der Fahrerarbeitsplatzmodul als Linkslenkervariante ausgeführt ist. Die Modulöffnung 5 (für den Fahrerarbeitsplatz nicht gezeigt) ist zur Aufnahme des Türmoduls 7 schematisch durch eine gestrichelte Linie angedeutet, wobei ein ebenfalls schematisch dargestelltes Türmodul 7 in die Modulöffnung 5 eingesetzt ist, welches eine zweiflügelige Tür umfasst. Eine Bestuhlung 8 ist im Innenraum des Omnibusses eingesetzt, wobei der Innenraum im Bereich vor dem Türmodul 7 als Verkehrsweg frei ist.

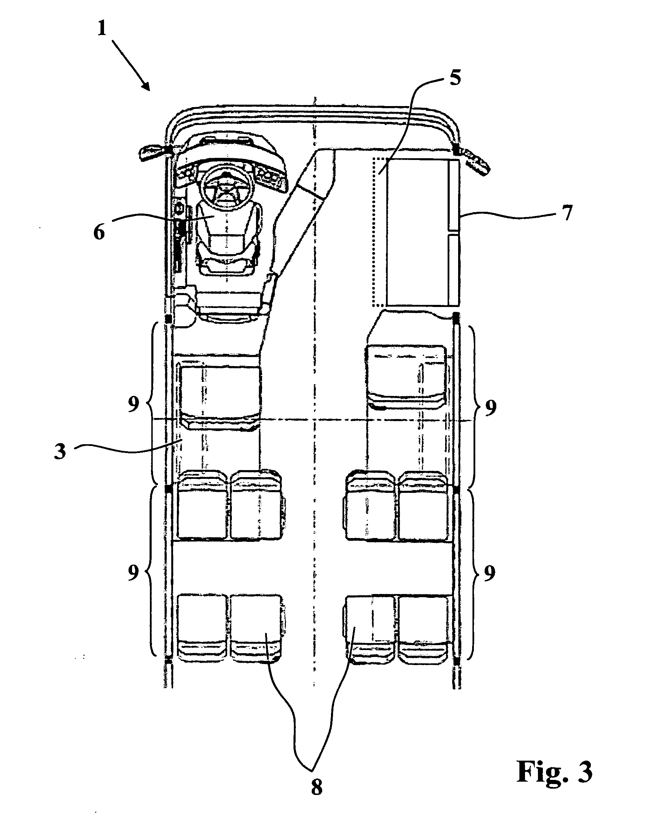

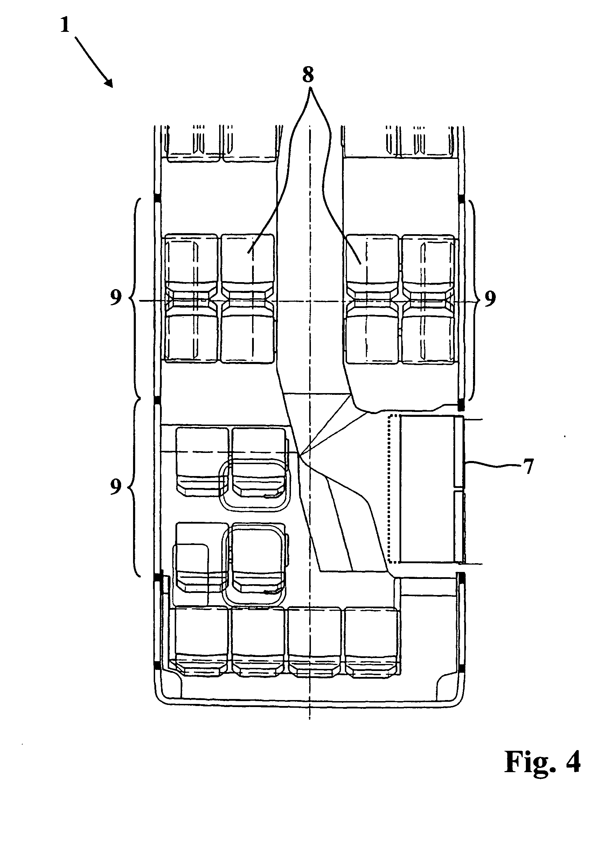

In Fig. 3 und Fig. 4 sind die Fenstermodule 9, ein vorderes Türmodul 7 und ein Fahrerarbeitsplatzmodul 6 in einem eingebauten Zustand gezeigt, wobei Fig. 3 einen vorderen Abschnitt und Fig. 4 einen hinteren Abschnitt des Omnibusses 1 zeigt. Die Außenverkleidung des Omnibusses 1 wird im Wesentlichen aus den Fenstermodulen 9 und den Türmodulen 7 gebildet, wobei in Fig. 3 im vorderen linken Bereich des Omnibusses ein Fahrerarbeitsplatzmodul 6 eingesetzt ist. Erkennbar ist die einheitliche Größe bzw. Breite der Fenstermodule 9 untereinander, wobei die Einbaumaße, d.h. insbesondere die Breite der Fenstermodule 9 ebenfalls mit dem Breitenmaß des Türmoduls 7 übereinstimmt. Im Fahrgastraum ist eine Bestuhlung 8 dargestellt, welche entsprechend der Anordnung von Fenstermodulen 9 und Türmodulen 7 im Fahrgastraum angeordnet sind, sodass im Bereich des Türmoduls 7 beispielsweise keine Bestuhlung 8 vorgesehen ist, wobei die Bestuhlung 8 an den Fenstermodulen 9 montiert ist.

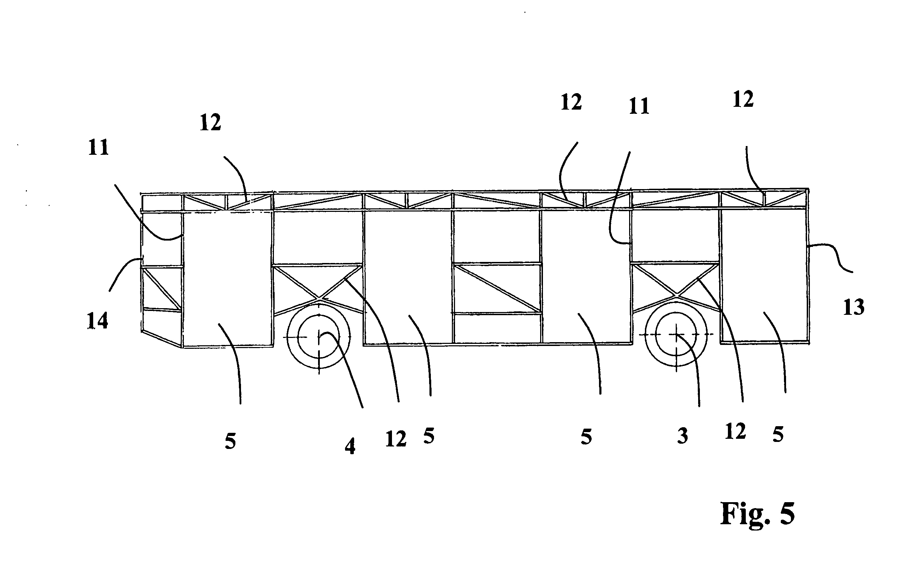

In Figur 5 ist eine schematische Seitenansicht auf ein Fahrzeuggerippe mit Modulöffnungen 5 dargestellt. Das Fahrzeuggerippe kann dabei beispielsweise aus verschweißten kaltgezogenen Vierkant-Hohlprofilen bestehen. Dabei befinden sich in Fahrtrichtung auf der rechten Seite vier Modulöffnungen 5, wobei die Modulöffnung 5 an der Fahrzeugvorderseite 13 gleichermaßen zur Aufnahme eines Fahrerarbeitsplatzmoduls, eines Türmoduls oder eines Fenstermoduls geeignet ist. Die übrigen Modulöffnungen 5 sind gleichermaßen für die Aufnahme eines Fenstermoduls oder eines Türmoduls geeignet. Die Modulöffnungen 5 sind dabei seitlich von Vertikalstreben 11 begrenzt und weisen benachbarte Gerippeabschnitte mit Fachwerkverstrebung 12 auf. Die Modulöffnungen 5 sind jeweils rechteckförmig ausgebildet und weisen im vorliegenden Ausführungsbeispiel eine Höhe von etwa 2,20m und eine Breite von etwa 1,50m auf. Die Bereiche oberhalb der Vorderachse 3 und der Hinterachse 4, sowie im Bereich des Fahrzeughecks 14, weisen bei der vorliegenden Ausführungsform keine Modulöffnung auf.

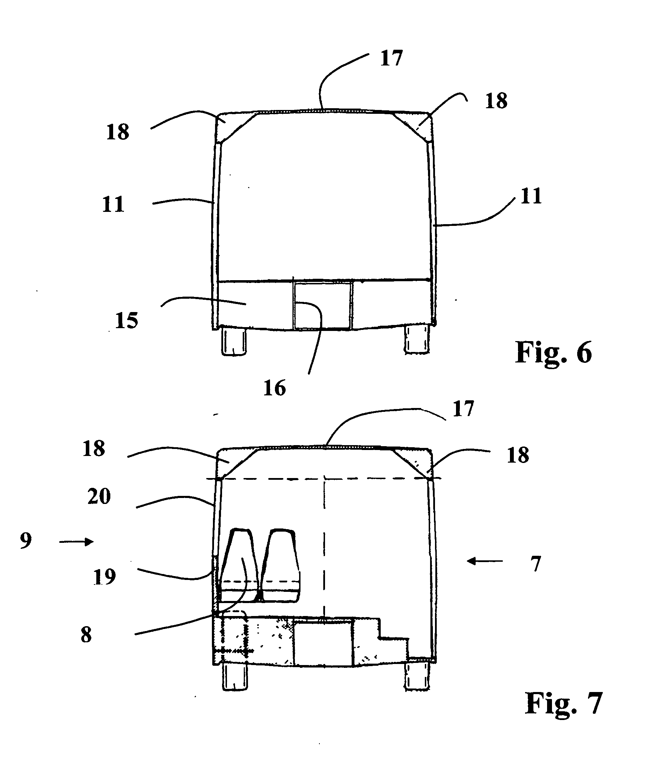

Figur 6 zeigt eine Querschnittsansicht durch ein Fahrzeuggerippe mit Modulöffnungen, wobei hier die Vertikalstreben 11 und die Eckverstreifungen 18 sowie das Dach 17 des Gerippes dargestellt sind. Das Gerippe ist dabei über die Vertikalstreben 11 mit Querträgern 15 verbunden, die die Verbindung mit den Längsträgern 16 des Fahrgestells herstellen.

Figur 7 zeigt die gleiche Querschnittsansicht, jedoch mit eingebautem Fenstermodul 9 und Türmodul 7. Das Fenstermodul 9 weist dabei eine Seitenwand 19 auf, an der die Bestuhlung 8 montiert ist. Ferner befindet sich oberhalb der Seitenwand 19 ein Fenster 20.

Die Erfindung beschränkt sich in ihrer Ausführung nicht auf das vorstehend angegebene bevorzugte Ausführungsbeispiel. Vielmehr ist eine Anzahl von Varianten im Rahmen von dem beanspruchten Schutzumfang denkbar.

### Bezugszeichenliste

- 1: Omnibus
- 2: Fahrtrichtung
- 3: Vorderachse
- 4: Hinterachse
- 5: Modulöffnung
- 6: Fahrerarbeitsplatzmodul
- 7: Türmodul
- 8: Bestuhlung
- 9: Fenstermodul
- 10: Motor- Getriebeeinheit
- 11: Vertikalstrebe
- 12: Fachwerkstrebe
- 13: Fahrzeugvorderseite
- 14: Fahrzeugheck
- 15: Querträger
- 16: Längsträger
- 17: Dach
- 18: Eckversteifung
- 19: Seitenwand
- 20: Fenster

## Patentansprüche

1. Omnibus mit einem Fahrzeuggerippe, wobei das Fahrzeuggerippe als mechanisch tragende Struktur ausgebildet ist, und das Fahrzeuggerippe auf der einen Fahrzeugseite (einerseits) wenigstens eine Modulöffnung (5) aufweist, die auf der anderen Fahrzeugseite (andererseits) wenigstens einer vorgesehenen Modulöffnung (5) räumlich gegenüberliegt, wobei die in Fahrzeuglängsrichtung gesehen jeweils einander gegenüberliegenden Modulöffnungen (5) solcherart abmessungsgleich dimensioniert sind, dass sie wahlweise zur wechselseitigen Aufnahme und lösbaren Befestigung von hierin einpaßbaren, vormontierten Fertigmodulen (6,7,9) - nämlich einem Fahrerarbeitsplatzmodul (6), wenigstens einem Türmodul (7) und wenigstens einem Fenstermodul (9) - vorgesehen sind, wobei wenigstens ein vormontiertes Fertigmodul (6,7,9) einerseits und wenigstens ein vormontiertes Fertigmodul (7,9) andererseits gegeneinander austauschbar oder ersetzbar ist, und zwar dergestalt, dass auf der einen Fahrzeugseite (einerseits) ein vormontiertes Fahrerarbeitsplatzmodul (6) vorgesehen ist, das mit wenigstens einem auf der anderen Fahrzeugseite (andererseits) angeordneten vormontierten Türmodul (7) und/oder Fenstermodul (9) gegeneinander austauschbar ausgebildet ist, so dass diese jeweils in den in Fahrtrichtung gesehen einander gegenüberliegenden Modulöffnungen (5) einpaßbar sind.

2. Omnibus nach Anspruch 1, **dadurch gekennzeichnet, dass** wenigstens ein vormontiertes Fenstermodul (9) einerseits und wenigstens ein vormontiertes Türmodul (7) andererseits gegeneinander austauschbar und in den in Fahrtrichtung gesehen einander gegenüberliegenden Modulöffnungen (5) einpaßbar ist.

3. Omnibus nach einem oder mehreren der vorangegangenen Ansprüche, **dadurch gekennzeichnet, dass** die Modulöffnungen (5) im Wesentlichen rechteckförmig ausgebildet sind.

4. Omnibus nach Anspruch 3, **dadurch gekennzeichnet, dass** die Modulöffnungen (5) vorzugsweise 2,20 m hoch und 1,50 m breit bzw. 2,20 m hoch und 0,75 m breit sind.

5. Omnibus nach einem oder mehreren der vorangegangenen Ansprüche, **dadurch gekennzeichnet, dass** eine Karosserie am Omnibus (1) montiert ist, wobei im Wesentlichen nur noch die Modulöffnungen (5) im Fahrzeuggerippe geöffnet sind.

6. Omnibus nach einem der vorgenannten Ansprüche, **dadurch gekennzeichnet, dass** das Fahrerarbeitsplatzmodul (6) und/ oder das Türmodul (7) und/ oder das Fenstermodul (9) einen im wesentlichen L-förmigen Querschnitt aufweist, wobei ein horizontal verlaufender Schenkel zumindest teilweise einen Bodenabschnitt und ein vertikal verlaufender Schenkel zumindest teilweise einen Seitenwandabschnitt des Nutzfahrzeugs bildet.

7. Omnibus nach einem der vorgenannten Ansprüche, **dadurch gekennzeichnet, dass** die Verbindung des Fahrerarbeitsplatzmoduls (6) und/ oder des Türmoduls (7) und/ oder des Fenstermoduls (9) an das Fahrzeuggerippe mit mechanischen Verbindungsmitteln erfolgt.

8. Omnibus nach einem der Ansprüche 1 bis 6, **dadurch gekennzeichnet, dass** die Verbindung des Fahrerarbeitsplatzmoduls (6) und/ oder des Türmoduls (7) und/oder des Fenstermoduls (9) an das Fahrzeuggerippe durch Verkleben erfolgt.

9. Omnibus nach einem der vorgenannten Ansprüche, **dadurch gekennzeichnet, dass** elektrische, mechanische oder fluidische Verbindungsmittel zwischen den Modulen und dem Fahrzeuggerippe standardisierte Anschlüsse aufweisen.

10. Omnibus nach Anspruch 9, **dadurch gekennzeichnet, dass** die standardisierten Anschlüsse vorzugsweise im horizontalen verlaufenden Schenkel der Module angeordnet sind, um eine Integration der Anschlüsse im Bodenbereich des Moduls bzw. des Nutzfahrzeugs zu schaffen.

## Claims

1. Bus/coach with a vehicle framework, whereby the vehicle framework is designed as a mechanically load-bearing structure, and the vehicle framework on one side of the vehicle (on the one side) provides at least one module opening (5) which opening is located spatially opposite at least one module opening (5) provided on the other side of the vehicle (the other side), whereby the module openings (5) positioned opposite each other when viewed in the longitudinal vehicle direction are sized with identical dimensions in such a way that they are provided for the optional reciprocal support and detachable fastening of plug-in, pre-assembled modular assemblies (6, 7, 9) - that is, a driver's workplace module (6), at least one door module (7) and at least one window module (9) - whereby at least one pre-assembled modular assembly (6, 7, 9) on the one side and at least one pre-assembled modular assembly (7, 9) on the other side are mutually exchangeable or replaceable to the extent that, on one side of the vehicle (on the one side), one pre-assembled driver's workplace module (6) is provided, which driver's workplace module is designed so that it can be exchanged with at least one pre-assembled door module (7) and/or window module (9) arranged on the other side of the vehicle (on the other side), so that each of these modules can be fitted into the module openings (5) positioned opposite when viewed in the direction of travel.

2. Bus/coach in accordance with claim 1, **characterised in that** at least one pre-assembled window module (9) on one side and at least one pre-assembled door module (7) on the other side can be mutually exchanged and can be fitted into the module openings (5) positioned opposite each other when viewed in the direction of travel.

3. Bus/coach in accordance with one or several of the previous claims, **characterised in that** the module openings (5) are essentially designed in a square shape.

4. Bus/coach in accordance with claim 3, **characterised in that** the module openings (5) par preferably 2.20 m high and 1.50 m wide or 2.20 m high and 0.75 m wide.

5. Bus/coach in accordance with one or several of the previous claims, **characterised in that** a body is fitted on the bus/coach (1), whereby essentially the only remaining openings on the vehicle framework are the module openings (5).

6. Bus/coach in accordance with one of the previous claims, **characterised in that** the driver's workplace module (6) and/or the door module (7) and/or the window module (9) provides an essentially L-shaped cross-section, whereby a horizontally positioned flank at least partially forms a floor section and a vertically positioned flank at least partially forms a side-wall section of the commercial vehicle.

7. Bus/coach in accordance with one of the previous claims, **characterised in that** the connection of the driver's workplace module (6) and/or the door module (7) and/or the window module (9) to the vehicle framework is implemented with mechanical connecting devices.

8. Bus/coach in accordance with one of claims 1 to 6, **characterised in that** the connection of the driver's workplace module (6) and/or the door module (7) and/or the window module (9) to the vehicle framework is implemented by adhesion.

9. Bus/coach in accordance with one of the previous claims, **characterised in that** electrical, mechanical or fluid connecting devices provide standardised connections between the modules and the vehicle framework.

10. Bus/coach in accordance with claim 9, **characterised in that** the standardised connections our preferably arranged in the horizontally positioned flange of the modules, in order to integrate the connections in the floor area of the module and/or of the commercial vehicle.

## Revendications

1. Autobus avec une ossature de véhicule, auquel cas l'ossature de véhicule est conçue comme structure mécanique porteuse et l'ossature présente sur un côté du véhicule (d'une part) au moins une ouverture pour un module (5), qui est disposée du côté opposé d'au moins une ouverture pour module (5) prévue sur l'autre côté du véhicule (d'autre part), auquel cas les ouvertures pour module (5) opposées vu dans le sens longitudinal du véhicule ont les mêmes dimensions permettant ainsi, au choix, de loger réciproquement et de fixer de manière détachable des modules finis prémontés (6, 7, 9) adaptés à ces ouvertures, à savoir un module de poste de conduite (6), au moins un module de porte (7) et au moins un module de baie (9), auquel cas au moins un module fini prémonté (6, 7, 9), d'une part, et au moins un module fini prémonté (7, 9), d'autre part, est interchangeable ou peut être remplacé par l'autre de telle manière qu'un module de poste de conduite prémonté (6) soit prévu sur un côté du véhicule (d'une part) et est conçu de manière interchangeable avec au moins un module de porte prémonté (7) et/ou un module de baie (9) disposé sur l'autre côté du véhicule (d'autre part), si bien que ces modules s'adaptent aux ouvertures pour module (5) opposées vu dans le sens de la marche du véhicule.

2. Autobus selon la revendication 1, **caractérisé en ce qu'**au moins un module de baie prémonté (9) d'une part et au moins un module de porte prémonté (7), d'autre part, sont interchangeables et s'adaptent aux ouvertures pour module (5) opposées vu dans le sens de la marche du véhicule.

3. Autobus selon l'une ou plusieurs des revendications mentionnées précédemment, **caractérisé en ce que** les ouvertures pour module (5) sont pour l'essentiel rectangulaires.

4. Autobus selon la revendication 3, **caractérisé en ce que** les ouvertures pour module (5) ont de préférence une hauteur de 2,20 m et une largeur de 1,50 m ou une hauteur de 2,20 m et une largeur de 0,75 m.

5. Autobus selon l'une ou plusieurs des revendications mentionnées précédemment, **caractérisé en ce qu'**une carrosserie est montée sur l'autobus, auquel cas pour l'essentiel seules les ouvertures pour module (5) sont ouvertes dans l'ossature du véhicule.

6. Autobus selon l'une des revendications mentionnées précédemment, **caractérisé en ce que** le module de poste de conduite (6) et/ou le module de porte (7) et/ou le module de baie (9) présentent pour l'essentiel une section en forme de L, auquel cas un côté horizontal forme au moins partiellement une partie du plancher et un côté vertical forme au moins partiellement une partie de la paroi latérale du véhicule industriel.

7. Autobus selon l'une des revendications mentionnées précédemment, **caractérisé en ce que** la liaison du module de poste de conduite (6) et/ou du module de porte (7) et/ou du module de baie (9) à l'ossature du véhicule est assurée par le biais de moyens de liaison mécaniques.

8. Autobus selon l'une des revendications 1 à 6, **caractérisé en ce que** la liaison du module de poste de conduite (6) et/ou du module de porte (7) et/ou du module de baie (9) à l'ossature du véhicule est assurée par collage.

9. Autobus selon l'une des revendications mentionnées précédemment, **caractérisé en ce que** les moyens de liaison électriques, mécaniques ou hydrauliques entre les modules et l'ossature du véhicule présentent des raccords standardisés.

10. Autobus selon la revendication 9, **caractérisé en ce que** les raccords standardisés sont disposés de préférence dans le côté horizontal des modules permettant ainsi d'intégrer les raccords dans la zone de plancher du module ou du véhicule industriel.
